# EUROPEAN PATENT APPLICATION

(11) **EP 4 439 531 A1**
(43) Date of publication of application: **02.10.2024**
(21) Application number: 24163739.6
(22) Date of filing: 15.03.2024
(51) Int. Cl.: G09B 9/46, G09B 19/24, G09B 9/12, G09B 9/30

(54) **AUGMENTED REALITY HOIST TRAINING SYSTEM**

(30) Priority: 29.03.2023 US 202318192418
(71) Applicant: CAE Inc., Saint Laurent, QC H4T 1G6 (CA)
(72) Inventor: BAHOUS, Jean-Pierre, SAINT LAURENT, H4T 1G6 (CA); MIKUS, Stephen, SAINT LAURENT, H4T 1G6 (CA); PETRILLI, Alessandro, SAINT LAURENT, H4T 1G6 (CA); CINQUINO, Antonio, SAINT LAURENT, H4T 1G6 (CA); DESJARDINS, Vincent, SAINT LAURENT, H4T 1G6 (CA)
(74) Representative: Plasseraud IP

(57) **Abstract**

An apparatus for use in a training simulator includes: a cabin; a hoist rope; a boom mounted to an upper portion of the cabin for supporting an upper portion of the hoist rope; an actuator arm mounted to a lower portion of the cabin for supporting a lower portion of the hoist rope; and a controller for controlling the actuator arm, the controller being operative to adjust a position of a second end of the actuator arm within an arm coverage area, thereby to adjust a bottom position of the hoist rope. An actuator arm and a method are also described.

## Description

### TECHNICAL FIELD

The invention relates to a hoist training system, and in particular to a hoist training system for use with augmented reality.

### BACKGROUND

Hoist operators, for example those used in helicopters, must undergo training prior to operating a hoist. The use of simulators is desired, because it allows the operator to be trained in a safe and repeatable environment. A simulator has multiple advantages over the use of a real system for training. A simulator allows training exercises to be performed repeatedly in a safe and controlled environment, may allow for the simulation of unusual situations that are difficult to replicate in real systems, and does not require the availability of a helicopter pilot.

A conventional hoist training simulator involves a hoist rope installed on either a continuous loop or fed between two spools installed above and below a simulated helicopter rear cabin. The hoist rope can travel in the vertical direction to simulate the real helicopter raising and lowering a load. Additional hardware may be used to simulate more complex situations, such as a moving cabin or a swinging load.

One challenge in a training simulator is to provide a realistic experience for the trainee, so that the trainee can gain experience that mimics the real environment, and to provide an immersive experience during the training process.

Virtual reality (VR) and augmented reality (AR) can alter the visual appearance of the physical environment of the simulator, and thereby increase the realism of the simulator. However, particularly in AR systems, the simulator hardware is still visible to the trainee. Thus, it is difficult to add mechanical complexity to the simulator while maintaining an immersive AR environment.

Improvements are desired.

### SUMMARY

It is an object of the present invention to mitigate at least one drawback of the prior art.

It is an object of the present invention to provide a training system for a hoist that has improved realism for a trainee.

It is an object of the present invention to provide a training system for a hoist that is suitable for use with augmented reality.

It is an object of the present invention to provide a training system for a hoist that simulates a swinging load.

According to a first broad aspect, an apparatus for use in a training simulator includes: a cabin; a boom mounted to an upper portion of the cabin for supporting an upper portion of a hoist rope; and an actuator arm mounted to a lower portion of the cabin for supporting a lower portion of the hoist rope, the actuator arm being operative to adjust a position of a second end of the actuator arm within an arm coverage area, thereby to adjust a bottom position of the hoist rope.

Optionally, in any of the previous aspects, adjusting the position of the second end of the actuator arm within an arm coverage area comprises: causing the actuator arm to rotate about an axis; and varying a length of the actuator arm.

Optionally, in any of the previous aspects, the actuator arm is configured to adjust a bottom position of the hoist rope in response to a force exerted on the hoist rope.

Optionally, in any of the previous aspects, each of the boom and the actuator arm includes a cable angle detector for determining an angle of the hoist rope.

Optionally, in any of the previous aspects, the cabin is movable to simulate a movement of a vehicle.

Optionally, in any of the previous aspects, each of the boom and the actuator arm is configured such that the hoist rope has a fixed point of exit therefrom.

Optionally, in any of the previous aspects, each fixed point of exit is provided by passing the hoist rope through an aperture, the aperture permitting the hoist rope to exit in a plurality of directions.

Optionally, in any of the previous aspects, each fixed point of exit is provided by passing the hoist rope through a sleeve, the sleeve being pivotable about the fixed point of exit.

Optionally, in any of the previous aspects, each fixed point of exit is provided by passing the hoist rope between a plurality of pulleys.

Optionally, in any of the previous aspects, each fixed point of exit is provided by passing the hoist rope through a plurality of bearings.

According to a second broad aspect, a method for simulating a load on a hoist rope includes: determining first angles of deflection of a top of the hoist rope; determining second angles of deflection of a bottom of the hoist rope; based on the determined first and second angles of deflection, computing an effect on a simulated load from a force exerted on the hoist rope; and based on the computed effect on the simulated load, moving the bottom of the hoist rope to a new position.

Optionally, in any of the previous aspects, moving the bottom of the hoist rope to a new position comprises at least one of rotating or varying the length of an actuator arm attached to the bottom of the hoist rope.

Optionally, in any of the previous aspects, computing the effect on the simulated load comprises using a slung-load model.

According to a third broad aspect, there is provided a kit comprising: a cable angle detector for detecting an angle of a hoist rope; an actuator arm comprising: a first end pivotably connectable to a training simulator apparatus; and a second end for supporting the hoist rope; and a controller for controlling according to the detected angle of the hoist rope: a length of the actuator arm between the first end and the second end; and a pivot of the actuator arm about the first end.

Optionally, in any of the previous aspects, the hoist rope has a fixed point of exit from the second end.

Optionally, in any of the previous aspects, the cable angle detector is disposed at the second end of the actuator arm.

According to a further broad aspect, there is provided a kit for use in a training simulator comprising a cabin, the kit comprising: a boom mountable to an upper portion of the cabin for supporting an upper portion of a hoist rope; and an actuator arm mountable at a first end thereof to a lower portion of the cabin for supporting a lower portion of the hoist rope, the actuator arm being operative to adjust a position of a second end of the actuator arm within an arm coverage area, thereby to adjust a bottom position of the hoist rope.

Optionally, in any of the previous aspects, adjusting the position of the second end of the actuator arm within an arm coverage area comprises: causing the actuator arm to rotate about an axis; and varying a length of the actuator arm.

Optionally, in any of the previous aspects, the actuator arm is configured to adjust a bottom position of the hoist rope in response to a force exerted on the hoist rope.

Optionally, in any of the previous aspects, each of the boom and the actuator arm includes a cable angle detector for determining an angle of the hoist rope.

Optionally, in any of the previous aspects, each of the boom and the actuator arm is configured such that the hoist rope has a fixed point of exit therefrom and each fixed point of exit is preferably provided by: passing the hoist rope through an aperture, the aperture permitting the hoist rope to exit in a plurality of directions; passing the hoist rope through a sleeve, the sleeve being pivotable about the fixed point of exit; passing the hoist rope between a plurality of pulleys; or passing the hoist rope through a plurality of bearings.

### BRIEF DESCRIPTION OF THE DRAWINGS

Having thus generally described the nature of the invention, reference will now be made to the accompanying drawings, showing by way of illustration example embodiments thereof and in which:
Figure 1 is a schematic perspective view of a prior art hoist training simulator;
Figure 2 is a schematic bottom view of the hoist training simulator of Figure 1;
Figure 3 is a schematic perspective view of a hoist training simulator according to an embodiment;
Figure 4 is a schematic bottom view of the hoist training simulator of Figure 3;
Figure 5 is an actuator arm that could be used with the hoist training simulator of Figure 3;
Figure 6 is a cable angle detection system according to an embodiment;
Figure 7 is an illustration of a trainee exerting a force on a hoist rope;
Figures 8-10 are a cable angle detection system according to an embodiment;
Figures 11A and 11B are an apparatus for providing a fixed point of exit for a hoist rope, according to an embodiment;
Figure 12 is an apparatus for providing a fixed point of exit for a hoist rope, according to an embodiment;
Figure 13 is an apparatus for providing a fixed point of exit for a hoist rope, according to an embodiment;
Figure 14 is a cable angle detection system according to an embodiment;
Figures 15 and 16 are example configurations of the hoist training simulator for different training scenarios; and
Figure 17 is a flowchart of a method of simulating a load on a hoist rope according to an embodiment.

### DETAILED DESCRIPTION

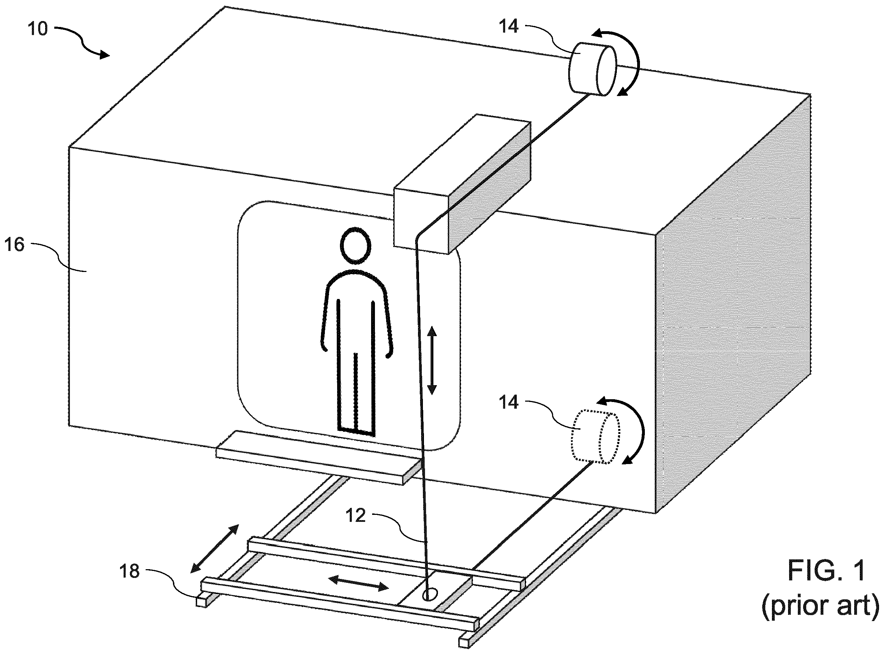

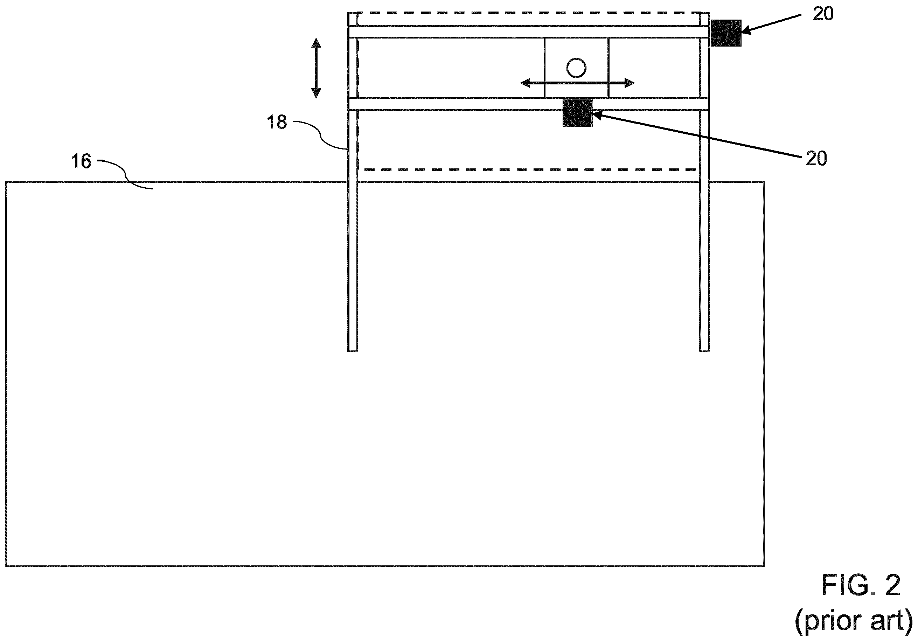

Referring to Figures 1 and 2, a typical conventional training system 10 for hoist operations in augmented reality applications includes a hoist rope 12 installed on either a continuous loop or fed between two spools 14 installed above and below the simulated helicopter rear cabin 16. The cabin 16 is capable of moving, to simulate the movements of a helicopter. The hoist rope 12 can travel in the vertical direction (the Z direction) as it would in a real helicopter, to simulate raising and lowering a load. However, this does not provide the functionality to simulate a swinging load, which is an important real-world circumstance to provide training for.

A conventional method to simulate a swinging load is to use an X-Y table 18 installed on the floor under the cabin 16, just before the bottom spool 14. The X-Y table 18 is capable of controllably moving the bottom of the hoist rope 12 in the X-Y plane. This type of system is suitable for use in a virtual environment, because the trainee wears VR glasses and thus cannot see any of the real hardware. However, in an augmented reality environment, the immediate surroundings outside the cabin 16 must be correctly color keyed in order for the visual system to function properly (e.g. blue screen). The added hardware of an X-Y table 18 with the necessary actuating mechanisms (such as the motors 20) would be placed in the trainee's direct line of sight when looking down at the load, making it difficult to hide from view. Additionally, the X-Y table 18 is a static system on the floor that does not move along with the cabin 16. A system with an X-Y table 18 also typically uses a continual closed loop rope that does not allow for a simple reconfiguration of the system for other training scenarios, such as helicopter refueling using a simulated hose and weapons training using a blank weapon.

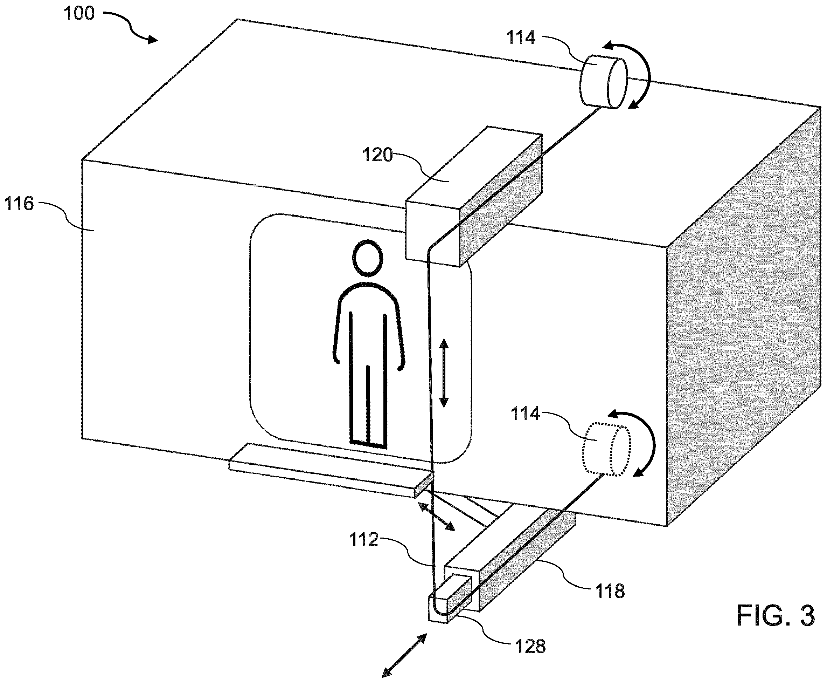

Referring to Figure 3, a training system 100 according to an embodiment includes a hoist rope 112 fed between two spools 114 installed above and below the simulated helicopter rear cabin 116. The spools 114 can move the hoist rope 112 in the Z direction, by winding or unwinding the hoist rope 112. The cabin 116 is capable of moving, to simulate the movements of a helicopter.

An actuator arm 118 installed beneath the cabin 116 can vary its length (radius) and angle to move the bottom end of the hoist rope 112 and thereby simulate a moving load supported by the hoist rope 112. The training system 100 may also include cable angle sensors (not shown in Figure 3) in the upper boom 120 and the lower actuator arm 118 to determine the angle of the hoist rope 112, which is described below in further detail. The angle of the hoist rope 112 can permit the determination of a force exerted on the hoist rope 112 by the trainee, which permits the training system 100 to react to the trainee's inputs with a realistic behavior of the simulated load.

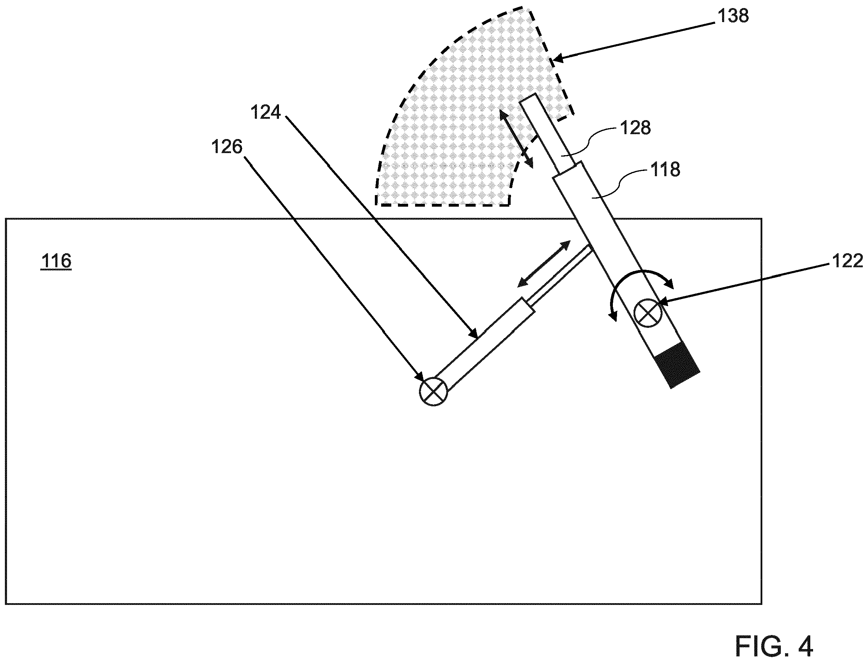

Referring to Figure 4, a bottom view of the cabin 116 is shown. The actuator arm 118 is mounted on a pivot 122, which permits the actuator arm 118 to rotate through a range of angles. The rotation of the actuator arm 118 about the pivot 122 is driven by an actuator 124, which is mounted on a pivot 126. Although a linear actuator is shown, it is contemplated that any suitable method or apparatus may be used for driving the rotation of the actuator arm 118.

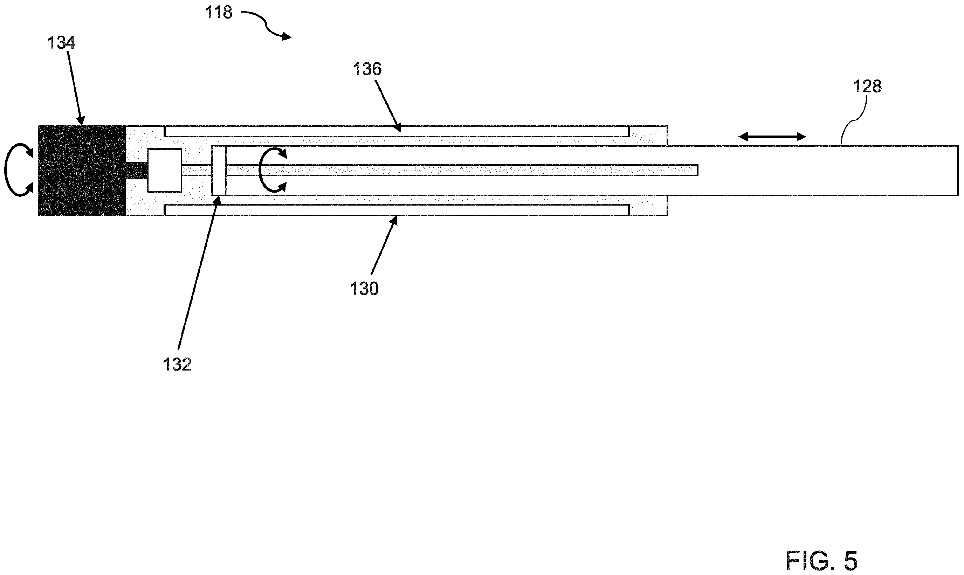

Referring to Figure 5, the actuator arm 118 is able to extend or retract in length. An inner portion 128 of the actuator arm 118 fits telescopically within an outer portion 130 of the actuator arm 118, and may be actuated by a ball screw actuator 132 driven by a motor 134 for longitudinal motion along a track guide 136 to control the overall length of the actuator arm 118. It is contemplated that any suitable method or apparatus may alternatively be used for controlling the length of the actuator arm 118.

Referring again to Figure 4, the combined linear and rotational movements of the actuator arm 118 permit the end of the actuator arm 118 to be positioned anywhere within the arm coverage zone 138, while maintaining all or most of the actuator arm 118 mechanism beneath the cabin 116 and out of the line of sight of the trainee.

It is contemplated that another suitable design may be used for the actuator arm 118, as long as the end of the actuator arm may be positioned anywhere in a suitably large arm coverage zone 138. For example, the actuator arm 118 may instead consist of a first portion pivotably mounted to the underside of the cabin 116 at a first end, and a second portion pivotably mounted to the first portion at a second, opposite end. In this example, the arm coverage zone 138 may have a different shape than the shape shown in Figure 4.

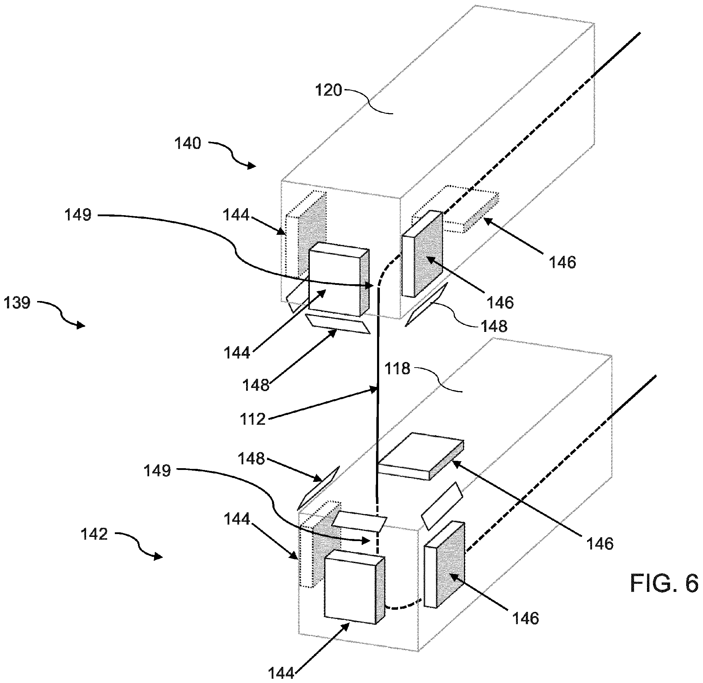

Referring to Figure 6, a cable angle detection system 139 according to a first embodiment is described. An upper cable angle sensor 140 may be disposed on the upper boom 120, and a lower cable angle sensor 142 may be disposed on the actuator arm 118. Each of the cable angle sensors 140, 142 has a first laser array 144 oriented in a first direction and a second laser array 144 oriented in a second direction. Each laser array 144 consists of an array of laser emitters. The lasers emitted by the laser arrays 144 are directed across the path of the hoist rope 112 and toward a corresponding receiver 146 for each laser array 144, via one or more mirrors 148. It is contemplated that some or all of the mirrors 148 may not be needed, or that additional mirrors 148 may be provided, depending on the geometry of the cable angle detection system 139. Each receiver 146 can determine which individual laser emitter has had its path interrupted by the hoist rope 112, and can therefore determine the position of the hoist rope 112 in one dimension. To ensure accuracy in the cable angle determination, the hoist rope is constrained to have a fixed point of exit 149 upstream of each cable angle sensor 140, 142, which is described below in further detail. Using the combined information from all four receivers 146, and knowing the geometry of the training system 100 and the position of the actuator arm 118, the two-dimensional angles of the top portion of the hoist rope 112 and the bottom portion of the hoist rope 112 can be determined.

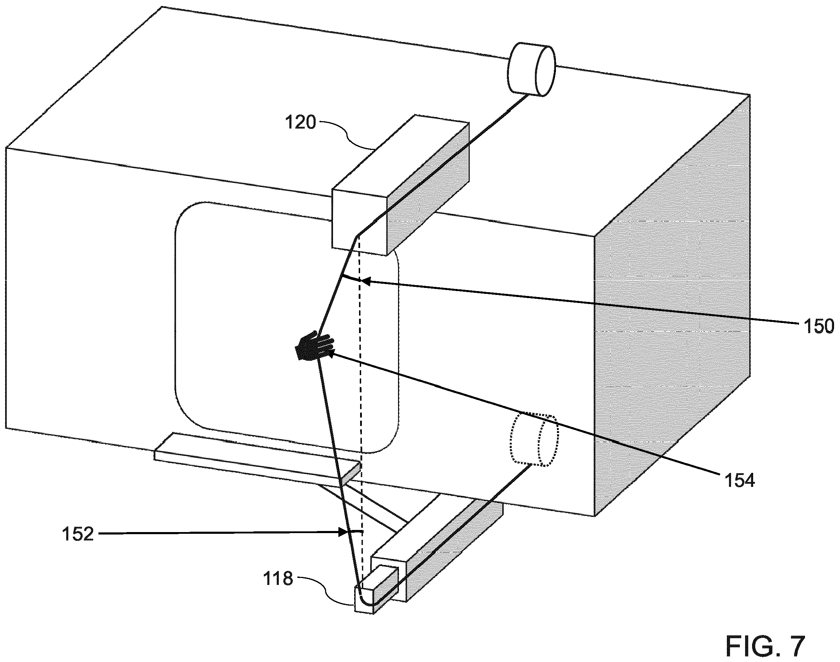

Referring to Figure 7, the angles 150, 152 of the hoist rope 112 determined by the upper and lower cable angle sensors 140, 142 are indicative of a hand position 154 of the trainee. The known geometry of the training system 100 and the position of the actuator arm 118 can be used to determine a magnitude and direction of the force vector exerted on the hoist rope 112 by the trainee. The actuator arm 118 can then be moved within the arm coverage zone 138 to simulate the response of the simulated load to the force exerted by the trainee.

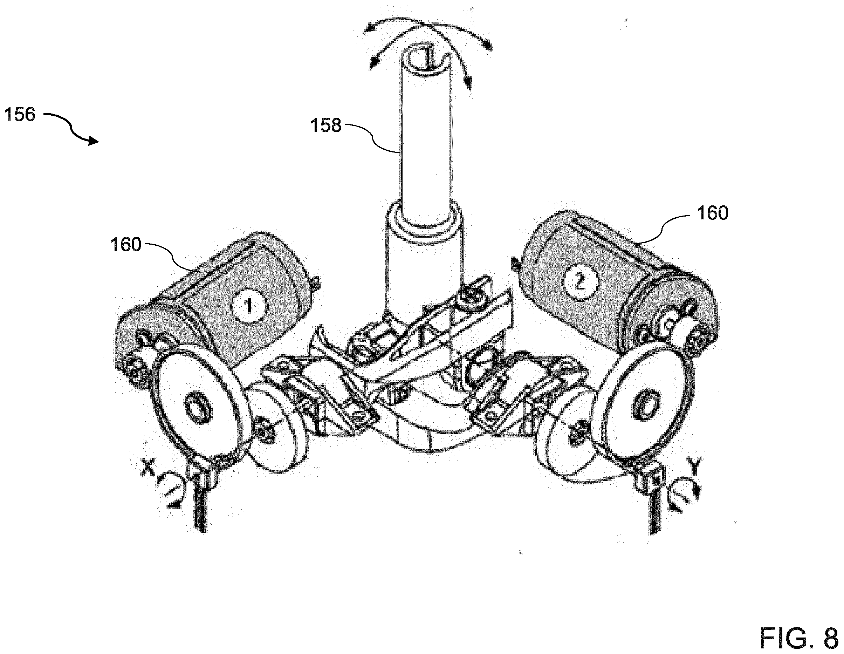

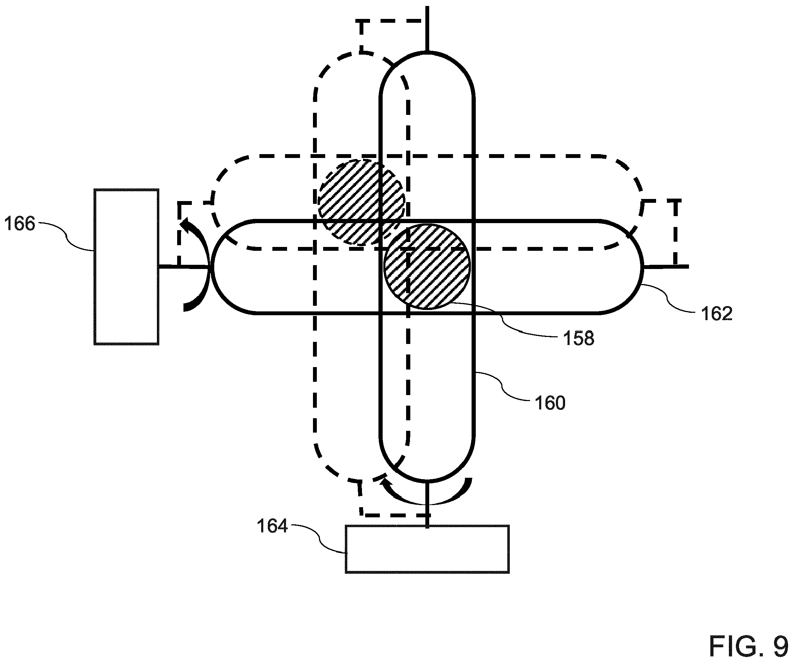

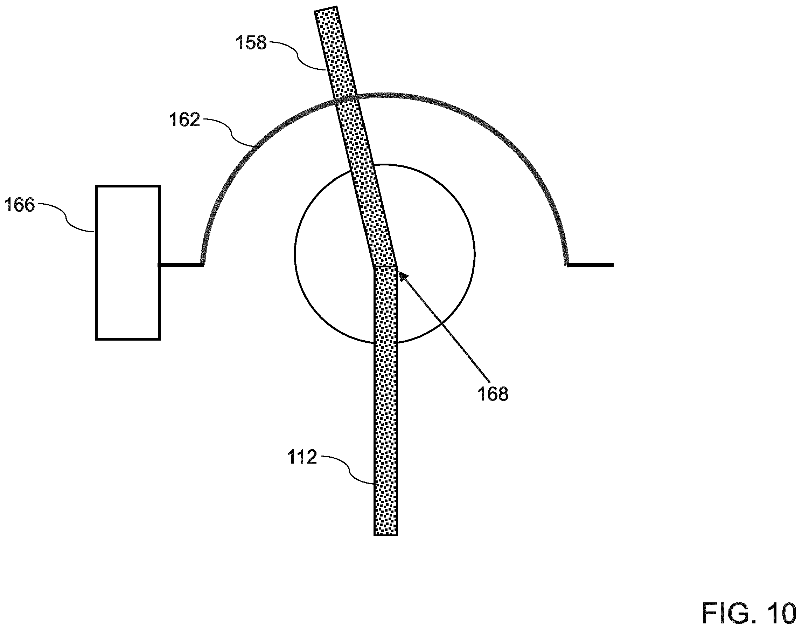

Referring to Figures 8-10, a cable angle detection system 156 according to a second embodiment is described. The cable angle detection system 156 may be used in either or both of the upper boom 120 and the actuator arm 118. In this embodiment, the hoist rope 112 (not shown in Figure 8) passes through a sleeve 158 which is able to rotate in two different directions, and which constrains the hoist rope to have a fixed point of exit 168 (shown in Figure 10) from either the upper boom 120 or the actuator arm 118. The fixed point of exit 168 may alternatively be provided in other manners that is described below, or in any other suitable manner. The sleeve 158 passes through two wipers 160, 162 (shown from a top view in Figure 9, and one of which is shown from a side view in Figure 10) oriented to detect movement of the sleeve 158 along the X and Y axes, respectively. Two potentiometers 164, 166 are oriented to detect the rotational movement of the respective wipers 160, 162 in their respective orientations, which is indicative of the angle of the hoist rope 112. Using the combined information from the cable angle detection systems 156 in the upper boom 120 and the actuator arm 118, and knowing the geometry of the training system 100 and the position of the actuator arm 118, the three-dimensional angles of the top portion of the hoist rope 112 and the bottom portion of the hoist rope 112 can be determined.

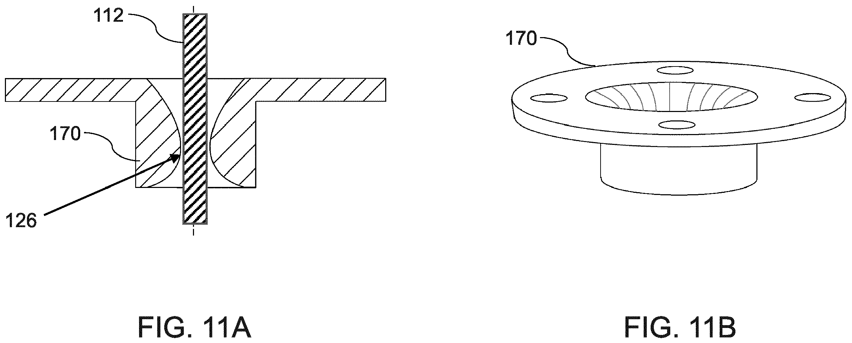

Referring to Figures 11A and 11B, an apparatus 170 for providing a fixed point of exit is described according to an embodiment. A cross section of the apparatus 170 is shown in Figure 11A, and a perspective view of the apparatus 170 is shown in Figure 11B. The apparatus 170 may be used in either or both of the upper boom 120 and the actuator arm 118. In this embodiment, the hoist rope 112 is constrained to have a fixed point of exit 172 by passing through an aperture 174 (best seen in Figure 11A) which may be machined to permit the hoist rope 112 to exit from the fixed point in a range of directions. The apparatus 170 may be used as a component of any of the cable angle detection systems disclosed herein.

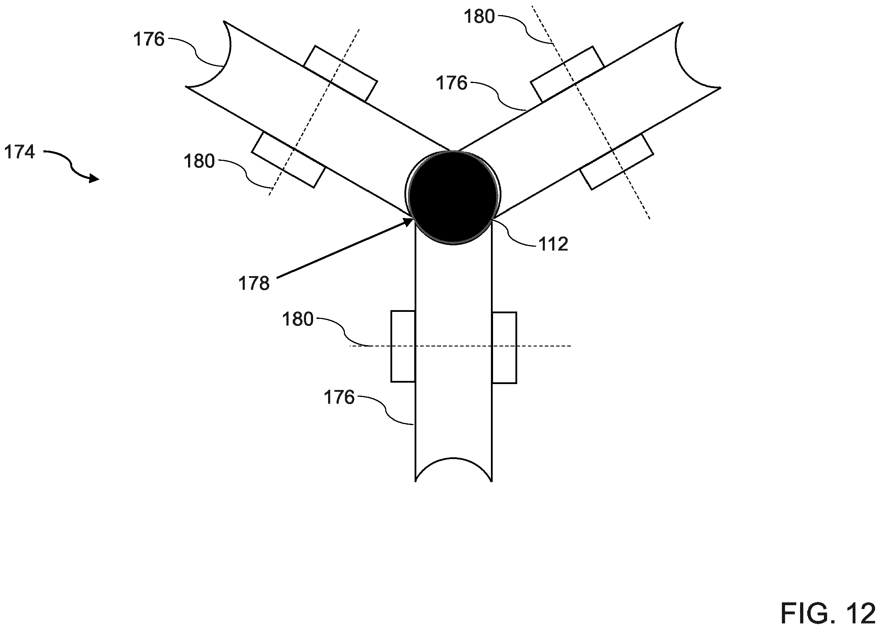

Referring to Figure 12, an apparatus 174 for providing a fixed point of exit is described according to an embodiment. The apparatus 174 may be used in either or both of the upper boom 120 and the actuator arm 118. In this embodiment, the hoist rope 112 is held between three pulleys 176, which maintain the lateral position of the hoist rope 112 at the fixed point of exit 178. The pulleys 176 are able to rotate about their respective axes 180, which may reduce the friction on the hoist rope 112. The apparatus 174 may be used as a component of any of the cable angle detection systems disclosed herein.

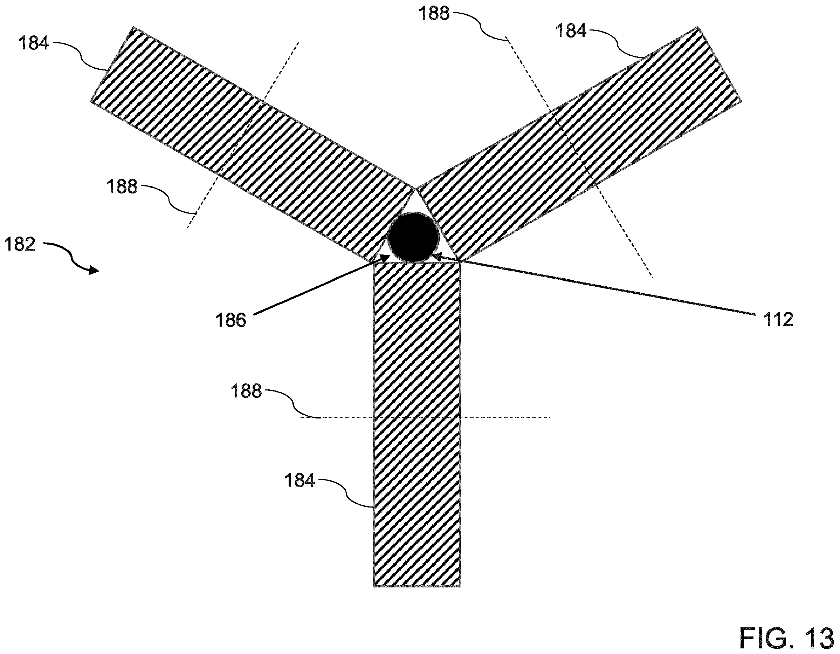

Referring to Figure 13, an apparatus 182 for providing a fixed point of exit will be described according to an embodiment. The apparatus 182 may be used in either or both of the upper boom 120 and the actuator arm 118. In this embodiment, the hoist rope 112 is held between three bearings 184, which maintain the lateral position of the hoist rope 112 at the fixed point of exit 186. The bearings 184 are able to rotate about their respective axes 188, which may reduce the friction on the hoist rope 112. The apparatus 174 may be used as a component of any of the cable angle detection systems disclosed herein.

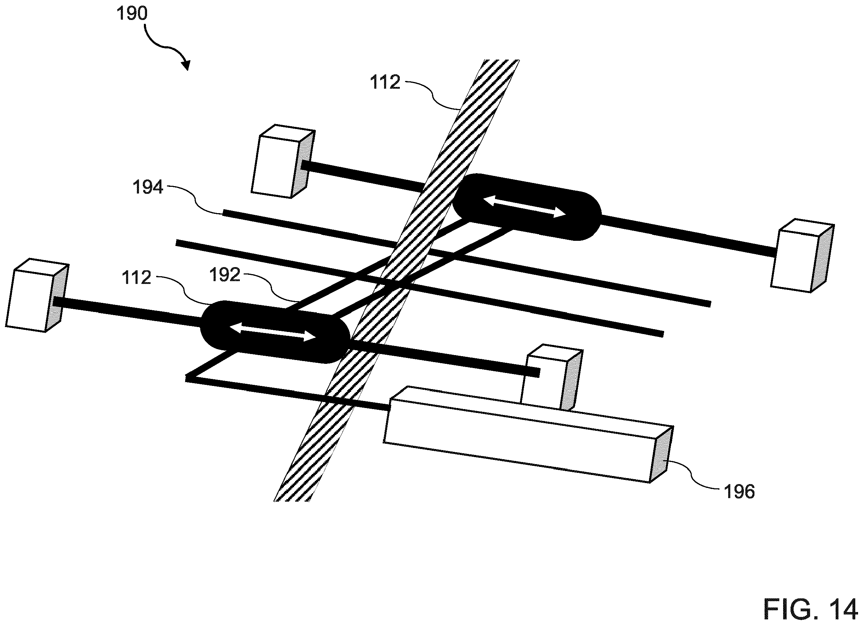

Referring to Figure 14, a cable angle detection system 190 according to a third embodiment is described. The cable angle detection system 190 may be used in either or both of the upper boom 120 and the actuator arm 118. In this embodiment, the hoist rope 112 is constrained in any suitable manner to have a fixed point of exit (not shown) from either the upper boom 120 or the actuator arm 118. The hoist rope 112 passes through two wipers 192, 194, oriented to detect movement of the hoist rope 112 along the X and Y axes, respectively. A potentiometer 196 detects the translational movement of the wiper 192 in the X direction. A second potentiometer (not shown) detects the translational movement of the wiper 194 in the Y direction. The movement detected by the cable angle detection system 190 is indicative of the angle of the hoist rope 112. Using the combined information from the cable angle detection systems 190 in the upper boom 120 and the actuator arm 118, and knowing the geometry of the training system 100 and the position of the actuator arm 118, the three-dimensional angles of the top portion of the hoist rope 112 and the bottom portion of the hoist rope 112 can be determined.

By using a training system 100 according to any of the above embodiments, advantages can be achieved.

In some embodiments, an actuator arm 118 may be lighter and more compact than prior art solutions for controlling a bottom position of a hoist rope, thus enabling the actuator arm 118 to be mounted on the moving cabin 116 instead of being mounted on the floor. This permits the hoist cable 112 to move with the cabin 116 during simulations, and may thereby provide improved realism for the trainee.

In some embodiments, an actuator arm 118 may be more compact than prior art solutions for controlling a bottom position of a hoist rope, thus enabling the actuator arm 118 to be positioned such that most of the actuator arm 118 is out of the line of sight of the trainee. This permits the use of a more immersive AR training environment in which the simulator hardware is less visible to the trainee.

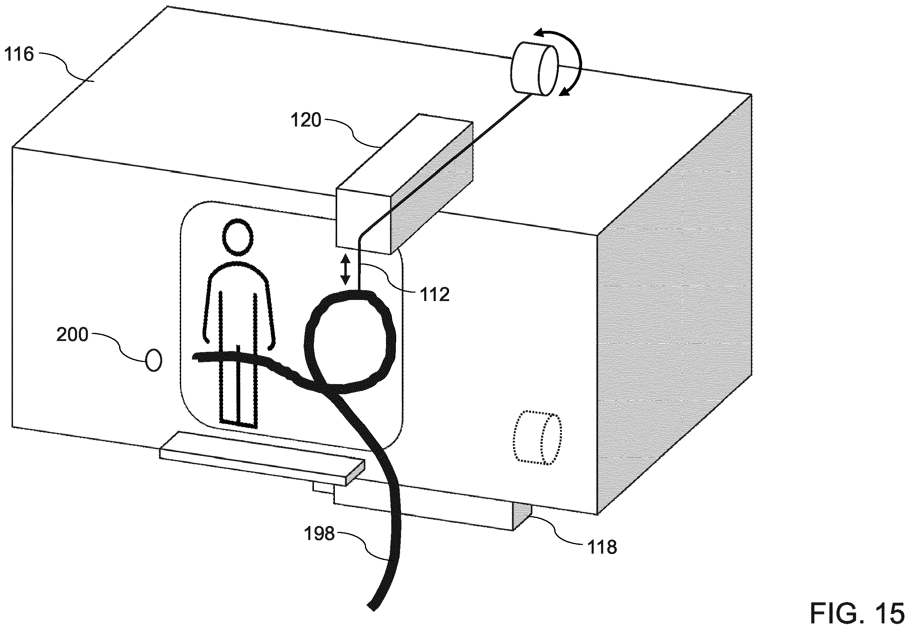

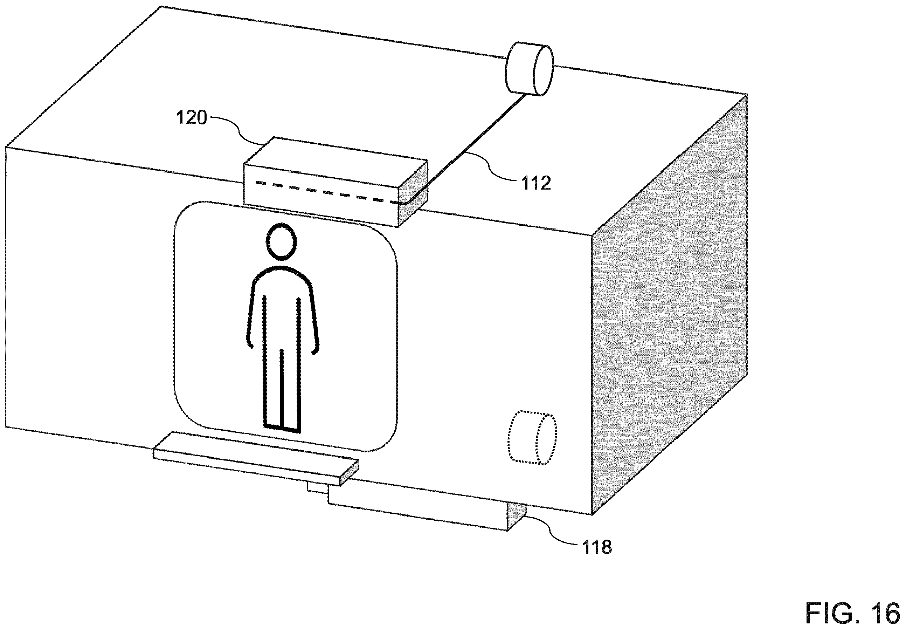

In some embodiments, the use of two reels 114 to feed the hoist rope 112 back and forth may provide added versatility to the training system 100, compared to prior art systems that use a continuous loop. In combination with the use of the actuator arm 118, this may permit greater control over the movement of the hoist rope 112 in some embodiments. In addition, in some embodiments, it may permit reconfiguring the training system 100 to represent other training scenarios in which a hoist rope is not desired, for example by stowing the actuator arm 118 beneath the cabin 116 as shown in Figures 15 and 16.

Figure 15 shows the training system 100 configured to train a trainee in a refueling operation. In this embodiment, the actuator arm 118 is stowed beneath the cabin 116 and out of view of the trainee. The hoist rope 112 may be suspended from the upper boom 120 and used to suspend a refueling hose 198. A refueling port 200 or other features may be provided for training purposes.

Figure 16 shows the training system 100 configured to train a trainee in a scenario in which the hoist rope 112 is not needed. This may, for example, be a weapons training scenario. In this embodiment, both the actuator arm 118 and the upper boom 120 are stowed out of view of the trainee, and the hoist rope 112 is kept away from the training position of the trainee. It is contemplated that additional training functions or accessories may be used with the training system 100 in this configuration, depending on the type of training to be performed.

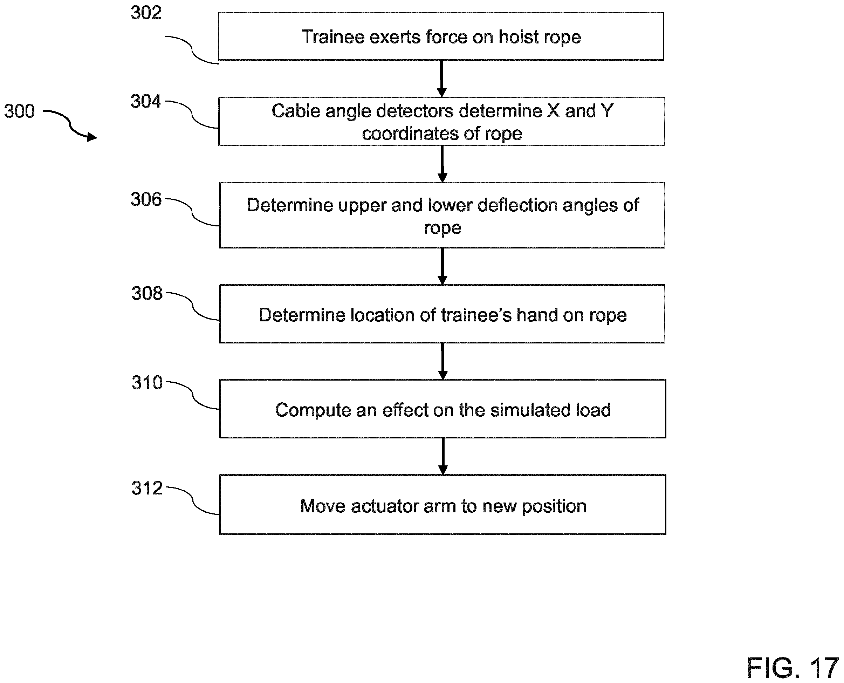

Figure 17 shows an example method 300 of simulating a load on a hoist rope, according to an embodiment. The method may be performed by any suitable computer hardware or software, which may include a processor and a memory. The method 300 may be used with any of the embodiments described herein.

At 302, a trainee exerts a force on the hoist rope, for example as can be seen in Figure 7. The force exerted on the hoist rope causes the hoist rope to deflect in the direction of the force.

At 304, the upper and lower cable angle detection systems determine the X and Y coordinates of the displaced hoist rope. The upper cable angle detection system determines X and Y coordinates of the hoist rope at the exit of the upper boom, and the lower cable angle detection system determines X and Y coordinates of the hoist rope at the exit of the actuator arm.

At 306, the deflection angles of the hoist rope in three dimensions are determined, at the upper (boom) and lower (actuator arm) ends. These determinations are based on the X and Y coordinates determined at 304 and the positions of the upper boom and the lower actuator arm. In particular, the current position of the end of the actuator arm 118 is taken into account, including both the length and angle of the actuator arm.

At 308, the location of the trainee's hand on the rope is computed, based on the angles determined at 306. The current position of the end of the actuator arm 118 is taken into account, including both the length and angle of the actuator arm.

At 310, an effect on the simulated load resulting from the displacement of the rope by the trainee is computed, which may include a reaction force on the simulated load, and may include a displacement of the simulated load. The effect may be computed using any suitable computational model, for example any slung-load model known in the art. For example, the effect may be calculated using the method described in the following scientific publication: Oktay, T., & Sultan, C. (2013), Modeling and control of a helicopter slung-load system, Aerospace Science and Technology, 29(1), 206-222.

At 312, the actuator arm 118 is repositioned to reflect a new position of the simulated load based on the determination in 310. This may be done by the processor sending a command to a controller of the actuator arm 118, indicating either a new position or a change in position for the actuator arm 118. The hoist rope 112 may also be moved to a new position, which may reflect a movement of the simulated load in response to the force exerted on the hoist rope 112 by the trainee.

The method 300 may be performed repeatedly during the training simulation, to respond in real time to the actions of the trainee and ensure that the movement of the actuator arm 118 reflects a realistic movement of the simulated load.

The embodiments described above are intended to be examples only. The scope of the invention is therefore intended to be limited solely by the appended claims.

## Claims

1. An apparatus for use in a training simulator, the apparatus comprising:
a cabin;
a boom mounted to an upper portion of the cabin for supporting an upper portion of a hoist rope; and
an actuator arm mounted at a first end thereof to a lower portion of the cabin for supporting a lower portion of the hoist rope, the actuator arm being operative to adjust a position of a second end of the actuator arm within an arm coverage area, thereby to adjust a bottom position of the hoist rope.

2. The apparatus of claim 1, wherein adjusting the position of the second end of the actuator arm within the arm coverage area comprises:
causing the actuator arm to rotate about an axis; and
varying a length of the actuator arm.

3. The apparatus of claim 1, wherein the actuator arm is configured to adjust a bottom position of the hoist rope in response to a force exerted on the hoist rope.

4. The apparatus of claim 1, wherein each of the boom and the actuator arm includes a cable angle detector for determining an angle of the hoist rope.

5. The apparatus of claim 1, wherein the cabin is movable to simulate a movement of a vehicle.

6. The apparatus of claim 1, wherein each of the boom and the actuator arm is configured such that the hoist rope has a fixed point of exit therefrom.

7. The apparatus of claim 6, wherein each fixed point of exit is provided by:
- passing the hoist rope through an aperture, the aperture permitting the hoist rope to exit in a plurality of directions;
- passing the hoist rope through a sleeve, the sleeve being pivotable about the fixed point of exit;
- passing the hoist rope between a plurality of pulleys; or
- passing the hoist rope through a plurality of bearings.

8. A kit for use in a training simulator comprising a cabin, the kit comprising:
a boom mountable to an upper portion of the cabin for supporting an upper portion of a hoist rope; and
an actuator arm mountable at a first end thereof to a lower portion of the cabin for supporting a lower portion of the hoist rope, the actuator arm being operative to adjust a position of a second end of the actuator arm within an arm coverage area, thereby to adjust a bottom position of the hoist rope.

9. The kit of claim 8, wherein adjusting the position of the second end of the actuator arm within an arm coverage area comprises:
causing the actuator arm to rotate about an axis; and
varying a length of the actuator arm.

10. The kit of claims 8, wherein the actuator arm is configured to adjust a bottom position of the hoist rope in response to a force exerted on the hoist rope.

11. The kit of claim 8, wherein each of the boom and the actuator arm includes a cable angle detector for determining an angle of the hoist rope.

12. The kit of claim 8, wherein each of the boom and the actuator arm is configured such that the hoist rope has a fixed point of exit therefrom and each fixed point of exit is preferably provided by:
- passing the hoist rope through an aperture, the aperture permitting the hoist rope to exit in a plurality of directions;
- passing the hoist rope through a sleeve, the sleeve being pivotable about the fixed point of exit;
- passing the hoist rope between a plurality of pulleys; or
- passing the hoist rope through a plurality of bearings.

13. A method for simulating a load on a hoist rope, comprising:
determining first angles of deflection of a top of the hoist rope;
determining second angles of deflection of a bottom of the hoist rope;
based on the determined first and second angles of deflection, computing an effect on a simulated load from a force exerted on the hoist rope; and
based on the computed effect on the simulated load, moving the bottom of the hoist rope to a new position.

14. The method of claim 13, wherein:
moving the bottom of the hoist rope to a new position comprises at least one of rotating or varying the length of an actuator arm attached to the bottom of the hoist rope.

15. The method of claims 13, wherein computing the effect on the simulated load comprises using a slung-load model.
